# EUROPEAN PATENT APPLICATION

(11) **EP 1 068 840 A2**
(43) Date of publication of application: **17.01.2001**
(21) Application number: 00115426.9
(22) Date of filing: 17.07.2000
(51) Int. Cl.: A61C 13/20, A44C 27/00, B22C 9/02

(54) **Mold holder for a device for producing dental and jewelry articles**

(30) Priority: 16.07.1999 IT TO990632
(71) Applicant: Carlucci, Enrico Hans, 10096 Collegno, Frazione Leumann (IT)
(72) Inventor: Carlucci, Enrico Hans, 10096 Collegno, Frazione Leumann (IT)
(74) Representative: Jorio, Paolo

(57) **Abstract**

A mold holder for a device (1) for producing dental and jewelry articles from metal material is located inside a seat (7) of the device (1) to receive a given amount of molten metal, and has a cavity (39) housing a mold (40), a first channel (42) located over the mold (40) and for feeding the melt to the cavity (39), and a second channel (29) located beneath the first channel (42) and which is connectable directly to a vacuum pump (3) of the device (1) by a conduit (4).

## Description

The present invention relates to a mold holder for a device for producing dental and jewelry articles and of the type in which a given quantity of metal is melted and poured into a mold inside the holder.

A device for producing metal dental articles comprises a pour chamber which can be sealed hermetically; a mold holder housing a mold; and a vacuum pump connected to the pour chamber by a conduit to form a vacuum inside the pour chamber.

The mold holder comprises an inner cavity for housing the mold; a channel for feeding the molten metal into the mold; and a series of openings beneath the mold to connect the inner cavity of the holder to the pour chamber. When pouring the metal, the pour chamber is closed hermetically, and the vacuum pump is activated to create in the pour chamber a vacuum which extends to the holder cavity through the openings and accelerates pouring of the metal into the holder cavity.

In recent times, on account of its mechanical and chemical characteristics, titanium has been used widely as a base material for producing dental articles. Titanium, however, has the drawback of cooling rapidly, so that the pour speed is not fast enough to ensure complete transfer to the cavities of known holders, particularly in the case of large-size articles involving the pouring of a considerable amount of titanium, and articles of particularly complex shape.

Cooling of the titanium before the pour is completed is particularly damaging by resulting in gas inclusions in the article, the formation of layers which seriously impair the mechanical characteristics and appearance of the article, and sometimes even in failure to fill the mold, thus resulting in incomplete articles.

The same drawbacks are also found, albeit to a lesser degree, in other metals, such as gold and chromium and molibdenum alloys.

It is an object of the present invention to provide a mold holder for a device for producing dental and jewelry articles, designed to eliminate the drawbacks of the known state of the art.

According to the present invention, there is provided a mold holder for a device for producing dental and jewelry articles, as claimed in Claim 1.

The holder according to the invention is particularly advantageous by reducing pour time, i.e. increasing the flow speed of the melt by concentrating suction by only forming the vacuum in the holder as opposed to the pour chamber as a whole. This means that, for a given vacuum pump, i.e. for a given pump capacity and a given degree of vacuum obtainable by the pump, the degree of vacuum is reached rapidly by the amount of gas to be expelled from the holder being less than that from the chamber as a whole.

The present invention also relates to a device for producing dental and jewelry articles.

According to the present invention, there is provided a device for producing dental and jewelry articles, as claimed in Claim 10.

A non-limiting embodiment of the present invention will be described by way of example with reference to the accompanying drawings, in which:
Figure 1 shows a partly sectioned front view, with parts removed for clarity, of a device in accordance with the present invention;
Figure 2 shows a side view, with parts removed for clarity, of the Figure 1 device;
Figure 3 shows a partly sectioned view in perspective of a detail of the Figure 1 device;
Figure 4 shows a partly sectioned side view, with parts removed for clarity, of a variation of the Figure 1 device;
Figure 5 shows a partly sectioned side view, with parts removed for clarity, of a further variation of the Figure 1 device.

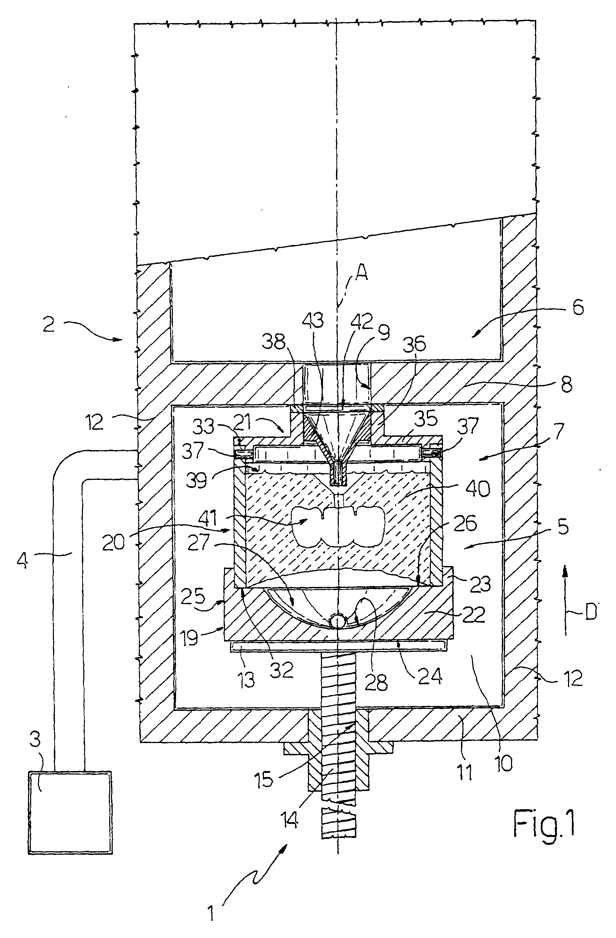

Number 1 in Figure 1 indicates as a whole a device for producing dental articles.

Device 1 comprises an oven 2; a vacuum pump 3 connected to oven 2 by a conduit 4; and a mold holder 5.

Oven 2 has a vertical axis A, and comprises a melting chamber 6, and a pour chamber 7 located beneath melting chamber 6 and separated from melting chamber 6 by a wall 8 having a hole 9 coaxial with axis A.

Chamber 6 is defined at the bottom by wall 8, and houses a known pot (not shown), and known electrodes (not shown) for producing an electric arc.

Chamber 7 is defined by a rear wall 10; a bottom wall 11; two lateral walls 12; wall 8 facing wall 11; and a door (not shown) movable between an open position and a closed position facing rear wall 10. When the door (not shown) is in the closed position, chamber 7 is closed hermetically and communicates through hole 9 with chamber 6, which is also closed hermetically.

Chamber 7 houses a supporting plate 13; and a threaded bar 14 extending along vertical axis A supports plate 13 on the top end, engages a threaded hole 15 in bottom wall 11, and is connected to a crank (not shown) for rotating bar 14 about axis A and moving plate 13 in a direction D parallel to axis A.

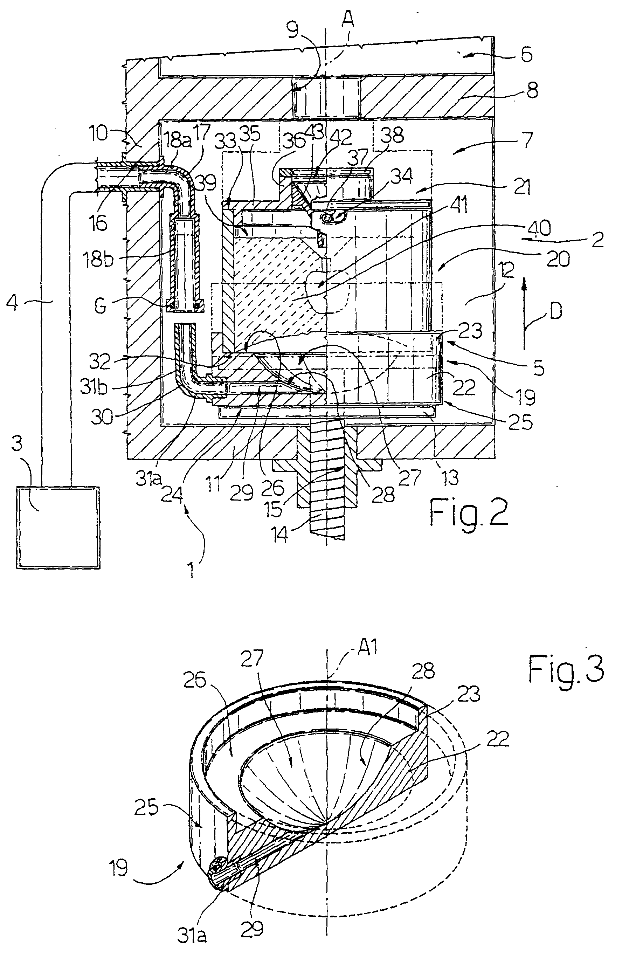

As shown more clearly in Figure 2, rear wall 10 has a hole 16 for the passage of conduit 4, and of an elbow pipe 17 which extends inside chamber 7 and comprises a portion 18a perpendicular to wall 10, and an open-bottomed portion 18b parallel to direction D and having an inner annular groove housing an O-ring-type annular seal G.

Mold holder 5 comprises a base 19; a cylindrical shell 20 on top of base 19; and a cover 21 on top of shell 20.

With reference to Figures 2 and 3, base 19 is formed in one piece from metal, is cup-shaped, and comprises a disk 22 of axis A1, and an annular edge 23 extending upwards from the periphery of disk 22.

Disk 22 comprises a circular bottom face 24; a cylindrical lateral face 25; an annular top face 26 adjacent to edge 23; and a cavity 27 located at axis A1 and defined by a spherical-bowl-shaped face 28. Base 19 also comprises a radial channel 29 formed in disk 22 and extending between face 25 and face 28.

Base 19 comprises an elbow pipe 30 in turn comprising a portion 31a connected hermetically to channel 29 at face 25 and extending radially with respect to axis A1, and a portion 31b extending parallel to direction D and which engages portion 18b telescopically and contacts seal G.

With reference to Figures 1 and 2, cylindrical shell 20 comprises an annular bottom face 32 which rests on face 26 at edge 23; an annular top face 33 on which the cover rests; and two L-shaped slots 34 at face 33.

Cover 21 comprises an annular plate 35; a cylindrical wall 36 integral with, and extending from the inner edge of, plate 35; and two pins 37 extending radially close to the outer edge of, and beneath, plate 35, and which, in use, engage slots 34 to form a bayonet connection between cover 21 and cylindrical shell 20.

Cover 21 also comprises a seal 38 on the top end of wall 36.

Once base 19, shell 20 and cover 21 are assembled, holder 5 defines a cavity 39 for housing a mold 40; and a channel 42 connecting cavity 39 to the outside of holder 5.

Mold 40 occupies most of cavity 39, is made of inert, porous material, and has a lost-wax pattern 41.

Device 1 also comprises a funnel 43 inserted inside, and for guiding the melt along, channel 42.

In actual use, mold 40 is enclosed in shell 20, which is placed on base 19 and closed by cover 21. Holder 5 containing mold 40 is placed on plate 13, which occupies the lowered position shown by the continuous line in Figure 2. Holder 5 is positioned on plate 13 so that axis A1 of holder 5 is substantially aligned with axis A of oven 2, and so that portion 31b of pipe 30 is aligned with portion 18b of pipe 17 as indicated by the continuous line in Figure 2. To simplify the above positioning operation, plate 13 and base 19 may comprise mutually connectable elements.

Once holder 5 is positioned on plate 13, plate 13 and holder 5 are raised in direction D to compress seal 38 against wall 8. As shown by the continuous line in Figure 1 and by the dash line in Figure 2, in the raised position, wall 36 of holder 5 is located at hole 9 so that chamber 6 communicates directly with cavity 39 via channel 42, and portion 31b of pipe 30 is inserted inside portion 18b of pipe 17.

Once a given quantity of titanium is placed in the pot (not shown) in chamber 6, chambers 6 and 7 are closed hermetically by said known door (not shown), and argon gas is fed into chamber 6 to prevent the titanium from oxidizing. When liquefied, the titanium is poured through funnel 43 into pattern 41, and pump 3 is turned on to produce a vacuum in cavity 39 and in the pores of mold 40 to accelerate pouring of the titanium.

In a variation not shown, chamber 7 is dispensed with, and melting chamber 6 of oven 2 is located on a seat, which need not be closed hermetically, on account of the vacuum only be formed in holder 5.

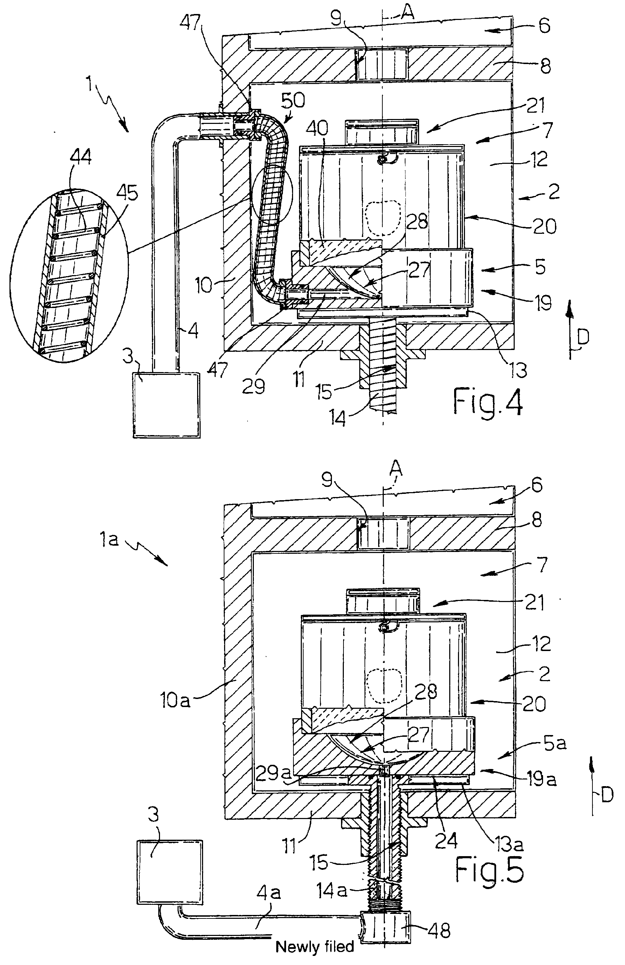

In the Figure 4 variation, pipes 17 and 30 are dispensed with, and base 19 is connected to conduit 4 by a flexible pipe 50 comprising a metal helical spring 44 and a rubber hose 45 enclosing spring 44. Pipe 50 is fitted at the ends with respective fittings 46 and 47 for respectively connecting pipe 50 to base 19 and to conduit 4 through hole 16. Pipe 32 has the advantage of being flexible and having a certain amount of mechanical resistance imparted by spring 44, which prevents pipe 50 from collapsing under the vacuum formed in pipe 50 itself and the temperature inside chamber 7.

In the Figure 5 variation, vacuum pump 3 is connected to a holder 5a through the bottom wall of a device la; and holder 5a differs from holder 5 by radial channel 29 being dispensed with, and by cavity 27 communicating externally via an axial hole 29a located between spherical-bowl-shaped upper face 28 and bottom face 24 of the base 19a.

Device 1a differs from device 1 by plate 13 being replaced with a perforated plate 13a, and by threaded bar 14 being replaced with a threaded bar 14a having an axial hole. Also, conduit 4 is replaced with a conduit 4a connecting vacuum pump 3 to a manifold 48 integral with threaded bar 14a, and device la has a rear wall 10a with no hole 16.

## Claims

1. A mold holder for a device for producing dental and jewelry articles from metal material; the device (1; 1a) comprising a vacuum pump (3) and a suction conduit (4; 4a) connected to said vacuum pump (3); the mold holder (5; 5a) being located in said device (1) and comprising a cavity (39) housing a mold (40), and a first channel (42) located over said mold (40) and for feeding melt to said cavity (39); and said mold holder (5; 5a) being characterized by comprising a second channel (29; 29a) located beneath said first channel (42); said second channel (29) being connectable directly to said suction conduit (4).

2. A mold holder as claimed in Claim 1, characterized by comprising a base (19; 19a), a lateral shell (20), and a cover (21); said first channel (42) being formed in the cover (21); and said second channel (29; 29a) being formed in the base (19; 19a).

3. A mold holder as claimed in Claim 2, characterized in that said base (19) comprises an upper face (28) defining a hollow (27) forming part of said cavity (39), and a lateral face (25); said second channel (29) extending between said upper face (28) and said lateral face (25).

4. A mold holder as claimed in Claim 3, characterized in that said upper face (28) is spherical-bowl-shaped; said second channel (29) extending between a central portion of said upper face (28) and said lateral face (25).

5. A mold holder as claimed in Claim 4, characterized by comprising connecting means (30; 50) between said second channel (29) and said suction conduit (4).

6. A mold holder as claimed in Claim 5, characterized in that said connecting means (30) comprise an elbow pipe comprising a fastening portion (31a) for connection to the lateral face (25) at the second channel (29), and a connecting portion (31b).

7. A mold holder as claimed in Claim 5, characterized in that said connecting means (50) comprise a flexible pipe (50).

8. A mold holder as claimed in Claim 7, characterized in that said flexible pipe comprises a helical spring (44), and a rubber hose (45) enclosing said helical spring (44).

9. A mold holder as claimed in Claim 2, characterized in that said base (19a) comprises an upper face (28) defining a hollow (27) forming part of said cavity (39), and a bottom face (24); said second channel (29a) extending between said upper face (28) and said bottom face (24).

10. A device for producing dental and jewelry articles, the device comprising a melting chamber (6) in which a given quantity of metal material is melted, a vacuum pump (3), and a suction conduit (4; 4a) connected to said vacuum pump (3); said device being characterized by comprising a mold holder (5; 5a) as claimed in one of Claims 1 to 9.

11. A device as claimed in Claim 10, characterized by comprising a seat (7) for housing said mold holder (5; 5a) and located beneath said melting chamber (6); further connecting means (17; 13a, 14a) between said suction conduit (4; 4a) and said second channel (29; 29a) being located inside said seat (7).

12. A device as claimed in Claim 11, characterized in that said further connecting means (17) comprise a further elbow pipe (17) in turn comprising a further fastening portion (18a) connected to a wall (10) of said seat (7) and to said suction conduit (4), and a further connecting portion (18b) parallel to said connecting portion (31b) and connectable telescopically to said connecting portion (31b).

13. A device as claimed in Claim 12, characterized by comprising a plate (13) for supporting said mold holder (5); said plate (13) being located in said seat (7), and being movable in a vertical direction (D); said connecting portion (31b) and said further connecting portion (18b) being parallel to said vertical direction (D) so as to connect the connecting portion (31b) and said further connecting portion (18b) telescopically when said plate (13) and said mold holder (5) are raised.

14. A device as claimed in Claim 11, characterized in that said further connecting means comprise a plate (13a) for supporting said mold holder (5a), and a bar (14a) for raising said plate (13a) and connected to a manifold (48) communicating with said suction conduit (4a); said plate (13a) and said bar (14a) being perforated to connect said second channel (29a) to said suction conduit (4a).

15. A device as claimed in Claim 10, characterized in that said seat (7) is a pour chamber (7).
